# EUROPEAN PATENT SPECIFICATION

(11) **EP 1 794 562 B1**
(45) Date of publication and mention of the grant of the patent: **16.04.2008**
(21) Application number: 05791806.2
(22) Date of filing: 27.09.2005
(51) Int. Cl.: G01L 3/24, G01L 3/10, G01L 1/16, G01P 3/487

(54) **MONITORING DEVICE FOR SENSING THE ROTATION SPEED AND THE TORQUE IN A SHAFT**
ÜBERWACHUNGSEINRICHTUNG ZUR ERFASSUNG DER DREHGESCHWINDIGKEIT UND DES DREHMOMENTS IN EINER WELLE
DISPOSITIF DE SURVEILLANCE POUR DETECTER LA VITESSE DE ROTATION ET LE COUPLE D'UN ARBRE

(30) Priority: 27.09.2004 GB 0421383
(43) Date of publication of application: 13.06.2007
(73) Proprietor: Melexis NV, 8900 Ieper (BE)
(72) Inventor: HILL, Adrian William, St. Helier, Jersey (GB)
(74) Representative: Wilson Gunn
(86) International application number: PCT/IB2005/002841
(87) International publication number: WO 2006/035284

(56) References cited:
- WO-A-00/58704
- DE-A1- 19 613 079
- DE-C1- 3 245 684
- US-A- 3 950 986
- US-A- 4 520 681
- US-A- 5 585 571
- US-A- 5 591 925
- US-A- 5 918 286
- US-A1- 2003 172 747

## Description

The present invention relates to a monitoring device for a shaft and in particular to a monitoring device for a shaft operable to determine the torque transmitted by the shaft as it rotates and the rotation speed of the shaft and more particularly to such a monitoring device which is additionally operable to determine the power transmitted by the shaft.

In order to manage the operation of an internal combustion engine in an effective and environmentally efficient manner, the engine management unit requires accurate information from sensors mounted throughout the engine. Of particular importance are sensors mounted on the drive shaft providing information relating to torque transmitted by the drive shaft and the rotation speed of the drive shaft hence allowing the calculation of the power transmitted by the drive shaft.

A common type of sensor for detecting the rotation speed of a shaft comprises a Hall effect sensing element (Hall element). Hall elements are operable to detect local magnetic fields and output a corresponding electrical signal. In this context, one or more Hall elements are provided adjacent to the shaft, the Hall elements being operable to detect fluctuations in the local magnetic field as the shaft rotates. The field fluctuations are caused by variations in the magnetic properties of the shaft around its circumference. These may be due to projections/cavities in the shaft surface, if the shaft material exhibits magnetic properties or magnetic material attached to the shaft. As the shaft rotates, these fluctuations can be detected and the rotation speed of the shaft calculated.

Conventional torque sensors for rotating shafts monitor the strain on the surface of the shaft to determine the transmitted torque. Known means for monitoring of this form include electronic strain gauges; optical torque transducers; or surface acoustic wave (SAW) resonators as disclosed in US 5,585,571.

The document US-A-5 591 925 discloses a sensor for measuring rotation speed and torque in a rotating shaft, comprising torque sensing means mounted on the shaft, rotation sensing means mounted adjacent to the shaft and comprising a Hall element, interface means for receiving output signals of the sensors and a coupling arrangement formed by a first element comprising a spine and a plurality of teeth and a second element electrically connected to the interface means and remaining stationary relative to the rotation of the shaft, so that signals are transmitted between them by noncontact coupling.

As it is necessary to determine both the rotation speed and the transmitted torque, in order to calculate the power transmitted by the drive shaft, if it is desired to monitor the power transmitted by the drive shaft, sensing means for both rotation speed and transmitted torque must be provided. The necessity to provide two sensors rather than a single sensor means that a relatively large space will be taken up by the monitoring device, the cost of manufacturing and fitting the device will be relatively large and the probability of a failure will also be relatively large.

It is therefore an object of the present invention to provide a new device for monitoring transmitted torque and rotation speed of a shaft.

According to a first aspect of the present invention there is provided a monitoring device suitable for sensing the rotation speed and the torque transmitted by a rotating shaft comprising:
torque sensing means mounted on said shaft, said torque sensing means being operable to monitor the shaft and thereby output a signal indicative of the torque transmitted by the shaft;
rotation sensing means mounted adjacent to said shaft, said rotation sensing means comprising a hall element operable to detect fluctuations in local magnetic flux as the shaft rotates and thereby output a signal indicative of the shaft rotation; and
interface means mounted adjacent to said shaft and operable to receive said signals output by said torque sensing means and said rotation sensing means, wherein the output of said torque sensing means is output to said interface means via a coupling arrangement comprising:
   a first coupling element electrically connected to said torque sensor and mounted on said shaft so as to co-rotate with said shaft; and
   a second coupling element electrically connected to said interface means and mounted on a stator positioned around said shaft so as to remain stationary relative to the rotation of the shaft, signals being transmitted between said coupling elements by non-contact coupling,
   wherein said first coupling element comprises a spine and a plurality of teeth, said teeth causing fluctuations in the local magnetic field adjacent to the shaft, as the shaft rotates.

This thus provides a combined rotation speed and transmitted torque sensing arrangement. By combining the two functions in a single arrangement, manufacturing and fitting costs can be reduced, reliability can be increased and the overall space occupied by the arrangement can be reduced.

Preferably the spine of the first element in said coupling arrangement comprises a split ring mounted on or around the circumference of the shaft and acting as an antenna or single turn coil. The teeth provided on said spine may project from the spine parallel to the axis of the shaft or perpendicularly to the axis of the shaft as desired or appropriate. The teeth are preferably regularly sized and spaced along the spine and most preferably have a generally rectangular profile.

The torque sensing means may be electrically connected between the ends of said split ring comprising said first coupling element. The first coupling element may be formed of a material that exhibits permanent magnetic properties in addition to being electrically conductive.

The rotation sensing means may comprise one or more Hall elements mounted adjacent to the portion of shaft carrying the first coupling element. In this manner the Hall element or elements are conveniently located such that they can detect fluctuations in the local magnetic field as the shaft (and hence the first coupling element) rotates.

The Hall element or elements are provided on a suitable substrate or on one or more suitable substrates. The substrate or substrates may be conveniently mounted on the stator. The interface means may be provided upon the same substrate as one or more of the Hall elements.

Preferably, the second element of the coupling arrangement is a split ring, the split ring being positioned around the portion of the shaft carrying the first coupling element. In this manner the second element is conveniently located adjacent to the first element allowing signals to be transmitted between the two coupling elements by non-contact coupling. The coupling arrangement is preferably adapted to transmit signals between the first and second coupling elements by RF coupling between the first and second coupling elements. It is of course possible that the coupling between the first and second coupling elements may alternatively be achieved by inductive or capacitive coupling.

The interface means is preferably electrically connected between the two ends of the split ring comprising the second coupling element. The interface means is operable to receive signals from said torque sensing means and said rotation speed sensing means. The interface means preferably also comprises means for outputting a signal or signals to external circuitry. The output signals may be the signals received from the torque sensing means and the rotation speed sensing means.

The interface means may additionally comprise a processing unit for processing signals received from said torque sensing means and said Hall rotation speed sensing means. The processing unit is preferably operable to generate analogue and/or digital output signals indicative of the rotation speed, transmitted torque and transmitted power of the shaft.

Whilst the invention may be implemented with torque sensing means comprising one ore more strain gauges or optical transducers, preferably the torque sensor means comprises a pair of Surface Acoustic Wave (SAW) resonators mounted on the surface of said shaft. Preferably, the SAW resonators are mounted on the shaft in an arrangement wherein when the shaft is rotated and transmitting torque one of the said SAW resonators is under tensile strain and the other SAW resonator is under compressive strain. Most preferably, the SAW resonators are arranged on the shaft such that they lie perpendicular to each other and each at 45° to the shaft rotation axis.

In embodiments wherein the torque sensing means are SAW resonators, preferably an RF driving signal is input to the SAW resonators via the coupling arrangement. Most preferably, the RF driving signal is generated by an RF signal generator incorporated into the interface means.

Preferably, the monitoring device is adapted to be fitted to a shaft of an engine or a shaft driven by an engine. In particular, the shaft may be the drive shaft of said engine. In such embodiments, the interface means may output signals to an engine control unit.

The device may be fitted to any suitable shaft in any suitable type of engine, including but not limited to internal combustion engines, electric motors, gas turbines or similar. In such embodiments, the external control unit is preferably an engine management unit.

In order that the invention is more clearly understood, it will now be described further herein with reference to the accompanying drawings, in which:
- Figure 1: shows a sectional view of a first embodiment of a combined rotation speed and transmitted torque sensor according to the present invention; and
- Figure 2: shows a sectional view through an alternative embodiment of a combined rotation speed and transmitted torque sensor according to the present invention.

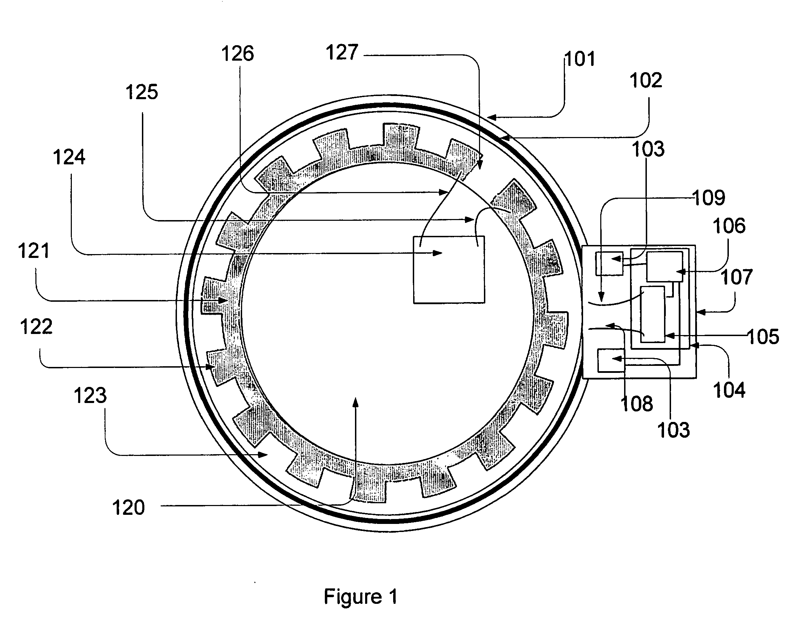

Referring now to figure 1, it is desired to monitor the rotation speed and torque transmitted by a shaft 120 in order to determine the power transmitted by the shaft 120. To achieve this torque sensing means 124 and rotation speed sensing means 103 are provided, each connected to an interface means 104.

The torque sensing means 124 comprise a pair of Surface Acoustic Wave (SAW) resonators (not shown) mounted on the surface of the shaft 120. The SAW resonators are mounted on the surface of the shaft 120 in such a manner that they experience the tensile or compressive strain as the local shaft surface. The SAW resonators are mounted perpendicular to one another and each at 45° to the rotation axis of the shaft. In this way, when the shaft 120 turns, one of the SAW resonators experiences tensile strain whilst the other experiences compressive strain.

An RF driving signal is input to the SAW resonators and as a result the resonators output a corresponding RF signal at their resonant frequency. As a result of the strain on the SAW resonators, the resonators are deformed and their resonant frequency varies. The amount of variation is related to the amount of strain the SAW resonator is exposed to and hence by analysing the output signals from both SAW resonators, the torque transmitted by the shaft can be determined. This technique is discussed further in US 5,585,571.

The RF signals for input to the SAW resonators are generated by an RF signal generator 105 incorporated into the interface means 104. The RF signal generator 105 may additionally be operable to receive RF signals output by the SAW resonators. Signals are transmitted between said resonators and said interface means 104 by way of a coupling arrangement.

The coupling arrangement comprises a pair of coupling elements, a first coupling element 121 is fixed to and co-rotates with shaft 120 and a second coupling element 102 is fixed to a stator 101 surrounding said shaft 120 and thus remains stationary whilst shaft 120 rotates. The elements are arranged such that RF signals input to one element induce corresponding RF signals in the other element due to RF coupling between the elements.

The first coupling element 121 is in the form of a split ring having a ring gap 127. Electrical connections 125 and 126 are made between the torque sensing means 124 and the first coupling element 121, a separate connection being made to each side of the ring gap 127.

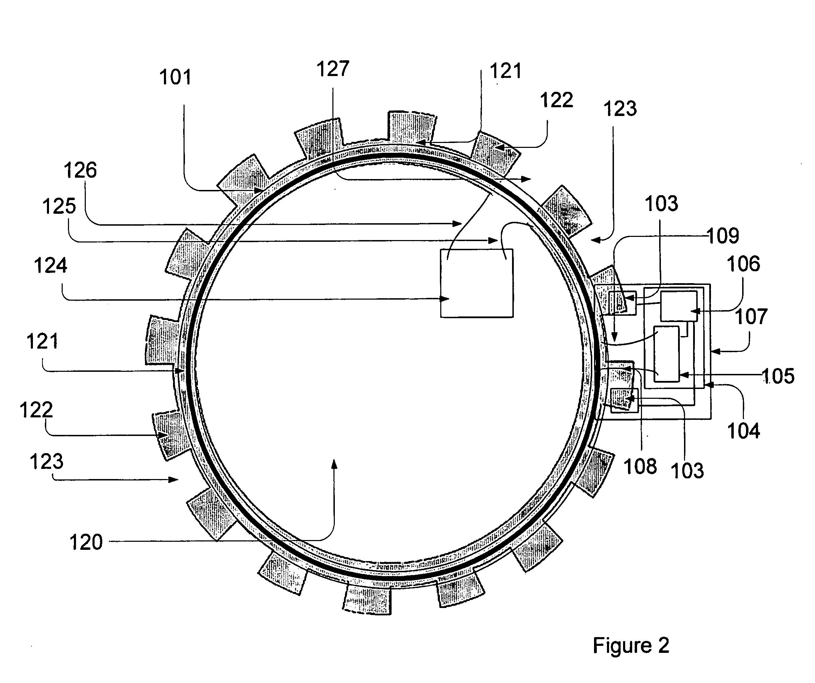

The coupling element 121 has a comb-like form wherein the ring provides a spine upon which are formed a plurality of teeth 122, which project from said spine. Gaps 123 are provided between the teeth 122. In figures 1 and 2, the teeth 122 project from the spine in directions perpendicular to the axis of the shaft 120. It is of course possible that in alternative embodiments, the teeth 122 may be arranged to project in directions parallel to the axis of the shaft 120. The teeth 122 are typically equally spaced around the split ring forming the first coupling element 121. In a particularly preferred arrangement, shown in figures 1 and 2, teeth 122 are provided on each side of the ring gap 127. Ring gap 127 typically has the same width as gaps 123 between the teeth 122.

The second coupling element 102 is in the form of a split ring having a ring gap. The interface means 104 is connected via electrical connections 108, 109 to each side of the ring gap. In the arrangement of figure 1, the second coupling element 102 is located radially outside the first coupling element 121. This allows RF signals to be passed between the interface means 104 and the torque sensing means 124 via the coupling arrangement.

The rotation speed sensing means 103 comprises a pair of Hall elements 103, provided on a substrate 107 mounted on or adjacent to the stator 101. The interface means is additionally provided on the same substrate 107.

In alternative embodiments, more or fewer Hall elements 103 may be provided as desired or appropriate. If a plurality of Hall elements 103 are provided, the Hall elements 103 may be mounted adjacent to one another or spaced apart from one another as desired or as appropriate.

The Hall elements 103 are operable to detect the local magnetic field, and output a signal indicative thereof to the interface means 104. As the shaft 120 rotates, the alternating teeth 122 and gaps of the first coupling element 121 (which being fixed to the shaft 120 co-rotates with the shaft 120) cause fluctuations in the local magnetic field detectable by the Hall elements 103. In order that these fluctuations are more readily detectable, the first coupling element 121 is formed from a material that conducts electricity and exhibits magnetic properties.

A biasing magnetic field may additionally be provided to increase the detectability of these fluctuations. Such a biasing field may be provided by biasing magnets located adjacent to each Hall element.

Referring now to figure 2, an alternative embodiment of the invention is shown wherein the stator 101 and hence the second coupling element 102 are located radially alongside rather than outside the first coupling element 121. This arrangement reduces the overall diameter of the complete assembly when compared with the embodiment of figure 1.

A further reduction in the overall diameter can be achieved by using a first coupling means 121 having teeth which project parallel to rather than perpendicular to the axis of the shaft 120. Such a coupling means could of course be used with the radially outside location of the second coupling means 102 shown in figure 1 also.

The interface means is provided with processing means 106 operable to receive signals from the Hall elements 103 and process said signals to determine the rate of rotation of the shaft 120. This is typically achieved by counting fluctuations in the local magnetic field associated with the teeth 122 on the first coupling element 121 to determine the number of revolutions that the shaft 120 has made in a predetermined time period. A number of methods of processing the output of a Hall element to determine revolution rate are well known in the art. The processing means 106 is further operable to output signals indicative to the rotation speed of the shaft 120 to external circuitry.

The processing means 106 may additionally be operable to receive RF signals from said torque sensing means 124 and to process said signals to determine the torque transmitted by the shaft 120 and to output signals indicative thereof to external circuitry. The processing means 106 may also be operable to calculate the power transmitted by the shaft 120 from the determined values of the rotation speed and the transmitted torque.

Typically, the monitoring device would be provided on a shaft in an engine or on a shaft driven by an engine. In particular, it is envisaged that the device may be provided on the drive shaft of the engine of a motor vehicle e.g. a car, van, truck, lorry, motorcycle etc. In such circumstances the processing means would be operable to output signals indicative of any or all of the shaft rotation rate, transmitted torque and transmitted power to an engine control unit. This information allows the engine control unit to monitor and optimise engine performance.

In alternative embodiments, the interface means 104 may omit the processing means 106 and be operative merely to receive signals output by the Hall elements 103 and the torque sensing means 124 and output said signals to external circuitry for processing and/or analysis.

## Claims

1. A monitoring device suitable for sensing the rotation speed and the torque transmitted by a rotating shaft (120) comprising: torque sensing means (124) mounted on said shaft (120), said torque sensing means (124) being operable to monitor the shaft and thereby output a signal indicative of the torque transmitted by the shaft; rotation sensing means (103) mounted adjacent to said shaft (120), said rotation sensing means (103) comprising a hall element operable to detect fluctuations in local magnetic flux as the shaft rotates and thereby output a signal indicative of the shaft rotation; and interface means (104) mounted adjacent to said shaft and operable to receive said signals output by said torque sensing means and said rotation sensing means, wherein the output of said torque sensing means (124) is output to said interface means (104) via a coupling arrangement comprising: a first coupling element (121) electrically connected to said torque sensor (124) and mounted on said shaft (120) so as to co-rotate with said shaft; and a second coupling element (102) comprising a split ring positioned around the portion of the shaft carrying said first coupling element and electrically connected to said interface means (104) and mounted on a stator (101) positioned around said shaft (120) so as to remain stationary relative to the rotation of the shaft, signals being transmitted between said coupling elements by non-contact coupling, wherein said first coupling element comprises a spine, said spine comprising a split ring mounted on or around the circumference of the shaft and a plurality of teeth (122), said teeth causing fluctuations in the local magnetic field adjacent to the shaft, as the shaft rotates.

2. A monitoring device as claimed in claim 1 wherein the spine of the first element in said coupling arrangement acts as an antenna or single turn coil.

3. A monitoring device as claimed in any preceding claim wherein the teeth (122) provided on said spine project from the spine parallel to the axis of the shaft (120) to the axis of the shaft.

4. A monitoring device as claimed in any preceding claim wherein the teeth (122) provided on said spine project from the spine perpendicularly to the axis of the shaft (120).

5. A monitoring device as claimed in any one of claims 1 to 2 wherein the teeth (122) are regularly sized and spaced along the spine.

6. A monitoring device as claimed in any preceding claim wherein the teeth (122) have a generally rectangular profile.

7. A monitoring device as claimed in any preceding wherein the torque sensing means (124) are electrically connected between the ends of said split ring comprising said first coupling element (121).

8. A monitoring device as claimed in any preceding claim wherein the first coupling element (121) is formed of a material that exhibits permanent magnetic properties in addition to being electrically conductive.

9. A monitoring device as claimed in any preceding claim wherein the rotation sensing means (103) comprises one or more Hall elements mounted adjacent to the portion of shaft (120) carrying the first coupling element (121).

10. A monitoring device as claimed in claim 9 wherein the Hall element or elements are provided on a suitable substrate (107).

11. A monitoring device as claimed in claim 9 wherein the Hall elements are provided on one or more suitable substrates (107).

12. A monitoring device as claimed in claim 10 or claim 11 wherein the substrate or substrates (107) are mounted on the stator (101).

13. A monitoring device as claimed in any one of claims 10 to 12 wherein the interface means (104) is provided upon the same substrate (107) as one or more of the Hall elements.

14. A monitoring device as claimed in any preceding claim wherein the second element (102) of the coupling arrangement is positioned around the portion of the shaft (120) carrying the first coupling element (121).

15. A monitoring device as claimed in any preceding claim wherein signals are transmitted by RF coupling.

16. A monitoring device as claimed in any preceding claim wherein signals are transmitted by inductive or capacitive coupling.

17. A monitoring device as claimed in any preceding claim wherein the interface means (104) is electrically connected between the two ends of the split ring comprising the second coupling element (102).

18. A monitoring device as claimed in any preceding claim wherein the interface means (104) is operable to receive signals from said torque sensing means (124) and said rotation speed sensing means (103).

19. A monitoring device as claimed in any preceding claim wherein the interface means (104) comprises means for outputting a signal or signals to external circuitry.

20. A monitoring device as claimed in claim 19 wherein the output signals are the signals received from the torque sensing means (124) and the rotation speed sensing means (103).

21. A monitoring device as claimed in any preceding claim wherein the interface means (104) comprises a processing unit for processing signals received from said torque sensing means (124) and said Hall rotation speed sensing means (103).

22. A monitoring device as claimed in claim 21 wherein the processing unit is operable to generate analogue and/or digital output signals indicative of the rotation speed, transmitted torque and transmitted power of the shaft (120).

23. A monitoring device as claimed in any preceding claim wherein the torque sensor means (124) comprises a pair of Surface Acoustic Wave (SAW) resonators mounted on the surface of said shaft (120).

24. A monitoring device as claimed in claim 23 wherein the SAW resonators are mounted on the shaft (120) in an arrangement wherein when the shaft is rotated and transmitting torque one of the said SAW resonators is under tensile strain and the other SAW resonator is under compressive strain.

25. A monitoring device as claimed in claim 22 or claim 24 wherein the SAW resonators are arranged on the shaft (120) such that they lie perpendicular to each other and each at 45° to the shaft rotation axis.

26. A monitoring device as claimed in any one of claims 23 to 25 wherein an RF driving signal is input to the SAW resonators via the coupling arrangement.

27. A monitoring device as claimed in claim 26 wherein the RF driving signal is generated by an RF signal generator incorporated into the interface means (104).

28. A monitoring device as claimed in any preceding claim wherein the monitoring device is adapted to be fitted to a shaft (120) of an engine or a shaft driven by an engine.

29. A monitoring device as claimed in claim 28 wherein the interface means (104) outputs signals to an engine control unit.

30. A monitoring device as claimed in claim 29 or claim 29 wherein the engine is any one of an internal combustion engine, an electric motor or a gas turbine.

## Patentansprüche

1. Überwachungsvorrichtung, geeignet zum Abfühlen der Rotationsgeschwindigkeit und des Drehmoments, welches von einer rotierenden Welle (120) übertragen wird, mit: Drehmomentabfühlmitteln (124), welche an der genannten Welle (120) montiert sind, wobei die genannten Drehmomentabfühlmittel (124) dazu betriebsfähig sind, die Welle zu überwachen und dadurch ein Signal abzugeben, welches auf das von der Welle übertragene Drehmoment hinweist; Rotationsabfühlmitteln (103), welche benachbart der genannten Welle (120) montiert sind, wobei die genannten Rotationsabfühlmittel (103) ein Hall-Effekt-Element aufweist, welches betriebsfähig ist, um Fluktuationen in dem lokalen magnetischen Fluss zu erkennen, während die Welle rotiert und dadurch ein Signal abgibt, welches auf die Wellenrotation hinweist; und Schnittstellenmitteln (104), welche benachbart der genannten Welle montiert und betriebsfähig sind, die genannten Signale, welche von den genannten Drehmomentabfühlmitteln und den genannten Rotationsabfühlmitteln abgegeben werden, aufzunehmen, wobei die Abgabe der genannten Drehmomentabfühlmittel (124) eine Abgabe an die genannten Schnittstellenmittel (104) über eine Kupplungsanordnung ist, welche aufweist: ein erstes Kupplungselement (121), welches elektrisch mit dem genannten Drehmomentsensor (124) verbunden und an der genannten Welle (120) so montiert ist, dass es zusammen mit der genannten Welle rotiert; und ein zweites Kupplungselement (102), welches einen geteilten Ring aufweist, welcher um den Anteil der Welle positioniert ist, welcher das genannte erste Kupplungselement trägt, und elektrisch mit den genannten Schnittstellenmitteln (104) verbunden sowie auf einem Stator (101) montiert ist, welcher um den genannten Schaft (120) so positioniert ist, dass er relativ zu der Rotation des Schaftes stationär bleibt, wobei Signale zwischen den genannten Kupplungselementen durch kontaktfreie Kupplung übertragen werden, wobei das genannte erste Kupplungselement einen Rücken mit einem geteilten Ring aufweist, welcher auf oder um dem/den Umfang der Welle montiert ist, und eine Mehrzahl von Zähnen (122), wobei die Zähne Fluktuationen in dem lokalen Magnetfeld benachbart der Welle verursachen, während die Welle rotiert.

2. Überwachungsvorrichtung nach Anspruch 1, bei welcher der Rücken des ersten Elements in der genannten Kupplungsanordnung als eine Antenne oder eine Einzelwendelspule wirkt.

3. Überwachungsvorrichtung nach einem der vorhergehenden Ansprüche, bei welcher die Zähne (122), welche an dem genannten Rücken vorgesehen sind, von dem Rücken parallel zu der Achse der Welle (120) zu der Achse der Welle vorragen.

4. Überwachungsvorrichtung nach einem der vorhergehenden Ansprüche, bei welcher die Zähne (122), welche an dem Rücken vorgesehen sind, von dem Rücken senkrecht zu der Achse der Welle (120) vorragen.

5. Überwachungsvorrichtung nach Anspruch 1 oder 2, bei welcher die Zähne (122) gleichmäßig bemessen und entlang des Rückens beabstandet sind.

6. Überwachungsvorrichtung nach einem der vorhergehenden Ansprüche, bei welcher die Zähne (122) ein im Allgemeinen rechteckiges Profil haben.

7. Überwachungsvorrichtung nach einem der vorhergehenden Ansprüche, bei welcher die Drehmomentabfühlmittel (124) elektrisch zwischen den Enden des genannten geteilten Ringes, welcher das genannte erste Kupplungselement (121) aufweist, verbunden sind.

8. Überwachungsvorrichtung nach einem der vorhergehenden Ansprüche, bei welcher das erste Kupplungselement (121) aus einem Material gebildet ist, das außer elektrisch leitend zu sein permanentmagnetische Eigenschaften aufweist.

9. Überwachungsvorrichtung nach einem der vorhergehenden Ansprüche, bei welcher die Rotationsabfühlmittel (103) ein oder mehrere Hall-Effekt-Elemente aufweist, welche benachbart dem Anteil der Welle (120) montiert ist/sind, welcher das erste Kupplungselement (121) trägt.

10. Überwachungsvorrichtung nach Anspruch 9, bei welcher das Hall-Effekt-Element oder die Hall-Effekt-Elemente auf einem oder mehreren geeigneten Substraten (107) vorgesehen ist.

11. Überwachungsvorrichtung nach Anspruch 9, bei welcher die Hall-Effekt-Elemente auf einem oder mehreren geeigneten Substraten vorgesehen sind.

12. Überwachungsvorrichtung nach Anspruch 10 oder 11, bei welcher das Substrat oder die Substrate (107) auf einem Stator (101) montiert ist bzw. sind.

13. Überwachungsvorrichtung nach einem der Ansprüche 10 bis 12, bei welcher die Schnittstellenmittel (104) auf demselben Substrat (107) wie ein oder mehrere Hall-Effekt-Elemente vorgesehen sind.

14. Überwachungsvorrichtung nach einem der vorhergehenden Ansprüche, bei welcher das zweite Element (102) der Kupplungsanordnung um den Anteil der Welle (120) positioniert ist, welcher das erste Kupplungselement (121) trägt.

15. Überwachungsvorrichtung nach einem der vorhergehenden Ansprüche, bei welcher Signale durch Radiofrequenz-Kupplung übertragen werden.

16. Überwachungsvorrichtung nach einem der vorhergehenden Ansprüche, bei welcher die Signale durch induktive oder kapazitive Kupplung übertragen werden.

17. Übertragungsvorrichtung nach einem der vorhergehenden Ansprüche, bei welcher die Schnittstellenmittel (104) elektrisch zwischen die beiden Enden des geteilten Ringes verbunden sind, welcher das zweite Kupplungselement (102) aufweist.

18. Überwachungsvorrichtung nach einem der vorhergehenden Ansprüche, bei welcher die Schnittstellenmittel (104) betriebsfähig sind, um Signale von den genannten Drehmomentabfühlmitteln (124) und den genannten Rotationsgeschwindigkeitsabfühlmitteln (103) aufzunehmen.

19. Überwachungsvorrichtung nach einem der vorhergehenden Ansprüche, bei welcher die Schnittstellenmittel (104) Mittel zum Ausgeben eines Signals oder von Signalen an eine externe Schaltung aufweisen.

20. Überwachungsvorrichtung nach Anspruch 19, bei welcher die Ausgangssignale die Signale sind, welche von den Drehmomentabfühlmitteln (124) und den Rotationsgeschwindigkeitsabfühlmitteln (103) aufgenommen wurden.

21. Überwachungsvorrichtung nach einem der vorhergehenden Ansprüche, bei welcher die Schnittstellenmittel (104) eine Verarbeitungseinheit zum Verarbeiten von Signalen aufweisen, welche von den genannten Drehmomentabfühlmitteln (124) und den genannten Hall-Effekt-Rotationsgeschwindigkeitsabfühlmitteln (103) aufgenommen wurden.

22. Überwachungsvorrichtung nach Anspruch 21, bei welcher die Verarbeitungseinheit betriebsfähig ist, um analoge und/oder digitale Ausgangssignale zu erzeugen, welche auf die Rotationsgeschwindigkeit, das übertragene Drehmoment und die übertragene Leistung der Welle (120) hinweisen.

23. Überwachungsvorrichtung nach einem der vorhergehenden Ansprüche, bei welcher die Drehmomentsensormittel (124) ein Paar von SAW (Surface Acoustic Wave = akustische Oberflächenwellen)-Resonatoren aufweisen, welche auf der Oberfläche der genannten Welle (120) montiert sind.

24. Überwachungsvorrichtung nach Anspruch 23, bei welcher die SAW-Resonatoren an der Welle (120) in einer Anordnung montiert sind, in welcher, wenn die Welle rotiert wird und ein Drehmoment überträgt, einer der genannten SAW-Resonatoren unter Zugbeanspruchung und der andere SAW-Resonator unter Druckspannung steht.

25. Überwachungsvorrichtung nach Anspruch 22 oder 24, bei welcher die SAW-Resonatoren so an der Welle (120) angeordnet sind, dass sie senkrecht zueinander und jeweils um 45° zu der Wellenrotationsachse liegen.

26. Überwachungsvorrichtung nach einem der Ansprüche 23 bis 25, bei welcher ein Radiofrequenz-Steuersignal in die SAW-Resonatoren über die Kupplungsanordnung eingegeben wird.

27. Überwachungsvorrichtung nach Anspruch 26, bei welcher das Radiofrequenz-Steuersignal von einem Radiofrequenz-Signal-Generator erzeugt wird, welcher in die Schnittstellenmittel (104) inkorporiert ist.

28. Überwachungsvorrichtung nach einem der vorhergehenden Ansprüche, bei welcher die Überwachungsvorrichtung geeignet ist, an eine Welle (120) eines Triebwerks oder eine von einem Triebwerk angetriebene Welle angepasst zu werden.

29. Überwachungsvorrichtung nach Anspruch 28, bei welcher die Schnittstellenmittel (104) Signale an eine Triebwerksteuereinheit abgibt.

30. Überwachungsvorrichtung nach Anspruch 28 oder 29, bei welcher das Triebwerk irgendein innenverbrennungstriebwerk, ein elektrischer Motor oder eine Gasturbine ist.

## Revendications

1. Dispositif de surveillance convenant pour détecter la vitesse de rotation et le couple transmis par un arbre de rotation (120) comprenant : un moyen de détection de couple (124) monté sur ledit arbre (120), ledit moyen de détection de couple (124) étant capable de surveiller l'arbre et de transmettre un signal indiquant le couple transmis par l'arbre ; un moyen de détection de rotation (103) monté de manière adjacente audit arbre (120), ledit moyen de détection de rotation (103) comprenant un élément à effet Hall capable de détecter des fluctuations d'un flux magnétique local lorsque l'arbre tourne et de transmettre un signal indiquant la rotation de l'arbre ; et un moyen d'interface (104) monté de manière adjacente audit arbre et capable de recevoir lesdits signaux transmis par ledit moyen de détection de couple et ledit moyen de détection de rotation, dans lequel la sortie dudit moyen de détection de couple (124) est transmise audit moyen d'interface (104) via un ensemble de couplage comprenant : un premier élément de couplage (121) électriquement relié audit capteur de couple (124) et monté sur ledit arbre (120) de façon à tourner avec ledit arbre ; et un second élément de couplage (102) comprenant une bague fendue positionnée autour de la partie de l'arbre portant ledit premier élément de couplage et électriquement relié audit moyen d'interface (104) et monté sur un stator (101) positionné autour dudit arbre (120) de façon à rester stationnaire par rapport à la rotation de l'arbre, des signaux étant transmis entre lesdits éléments de couplage par un couplage sans contact, dans lequel ledit premier élément de couplage comprend une structure, ladite structure comprenant une bague fendue montée sur ou autour de la circonférence de l'arbre et une pluralité de dents (122), lesdites dents provoquant des fluctuations du champ magnétique local adjacent à l'arbre, lorsque l'arbre tourne.

2. Dispositif de surveillance selon la revendication 1, dans lequel la structure du premier élément dans ledit ensemble de couplage agit comme une antenne ou une bobine à un seul tour.

3. Dispositif de surveillance selon l'une quelconque des revendications précédentes, dans lequel les dents (122) prévues sur ladite structure se projettent entre la structure parallèle à l'axe de l'arbre (120) et l'axe de l'arbre.

4. Dispositif de surveillance selon l'une quelconque des revendications précédentes, dans lequel les dents (122) prévues sur ladite structure se projettent depuis la structure perpendiculairement à l'axe de l'arbre (120).

5. Dispositif de surveillance selon l'une quelconque des revendications 1 à 2, dans lequel les dents (122) sont dimensionnées et espacées de manière régulière le long de la structure.

6. Dispositif de surveillance selon l'une quelconque des revendications précédentes, dans lequel les dents (122) possèdent un profil généralement rectangulaire.

7. Dispositif de surveillance selon l'une quelconque des revendications précédentes, dans lequel le moyen de détection de couple (124) est électriquement relié entre les extrémités de ladite bague fendue comprenant ledit premier élément de couplage (121).

8. Dispositif de surveillance selon l'une quelconque des revendications précédentes, dans lequel le premier élément de couplage (121) est formé d'un matériau qui présente des propriétés magnétiques permanentes en plus d'être électriquement conducteur.

9. Dispositif de surveillance selon l'une quelconque des revendications précédentes, dans lequel le moyen de détection de rotation (103) comprend un ou plusieurs élément(s) à effet Hall monté(s) de manière adjacente à la partie de l'arbre (120) portant le premier élément de couplage (121).

10. Dispositif de surveillance selon la revendication 9, dans lequel l'élément ou les éléments à effet Hall est/sont prévu(s) sur un substrat adéquat (107).

11. Dispositif de surveillance selon la revendication 9, dans lequel les éléments à effet Hall sont prévus sur un ou plusieurs substrat(s) adéquat(s) (107).

12. Dispositif de surveillance selon la revendication 10 ou la revendication 11, dans lequel le substrat ou les substrats (107) est/sont monté(s) sur le stator (101).

13. Dispositif de surveillance selon l'une quelconque des revendications 10 à 12, dans lequel le moyen d'interface (104) est prévu sur le même substrat (107) qu'un ou plusieurs des éléments à effet Hall.

14. Dispositif de surveillance selon l'une quelconque des revendications précédentes, dans lequel le second élément (102) de l'ensemble de couplage est positionné autour de la partie de l'arbre (120) portant le premier élément de couplage (121).

15. Dispositif de surveillance selon l'une quelconque des revendications précédentes, dans lequel les signaux sont transmis par un couplage RF.

16. Dispositif de surveillance selon l'une quelconque des revendications précédentes, dans lequel les signaux sont transmis par un couplage inductif ou capacitif.

17. Dispositif de surveillance selon l'une quelconque des revendications précédentes, dans lequel le moyen d'interface (104) est électriquement relié entre les deux extrémités de la bague fendue comprenant le second élément de couplage (102).

18. Dispositif de surveillance selon l'une quelconque des revendications précédentes, dans lequel le moyen d'interface (104) est capable de recevoir des signaux de la part dudit moyen de détection de couple (124) et dudit moyen de détection de vitesse de rotation (103).

19. Dispositif de surveillance selon l'une quelconque des revendications précédentes, dans lequel le moyen d'interface (104) comprend un moyen de transmission d'un signal ou de signaux vers des circuits externes.

20. Dispositif de surveillance selon la revendication 19, dans lequel les signaux de sortie sont les signaux reçus de la part du moyen de détection de couple (124) et du moyen de détection de vitesse de rotation (103).

21. Dispositif de surveillance selon l'une quelconque des revendications précédentes, dans lequel le moyen d'interface (104) comprend une unité de traitement destinée à traiter les signaux reçus de la part dudit moyen de détection de couple (124) et dudit moyen de détection de la vitesse de rotation à effet Hall (103).

22. Dispositif de surveillance selon la revendication 21, dans lequel l'unité de traitement est capable de générer des signaux de sortie analogiques et/ou numériques indiquant la vitesse de rotation, le couple transmis et la puissance transmise de l'arbre (120).

23. Dispositif de surveillance selon l'une quelconque des revendications précédentes, dans lequel le moyen de détection de couple (124) comprend une paire de résonateurs à ondes acoustiques de surface (SAW) montés sur la surface dudit arbre (120).

24. Dispositif de surveillance selon la revendication 23, dans lequel les résonateurs SAW sont montés sur l'arbre (120) selon un agencement dans lequel, lorsque l'arbre est tourné et transmet un couple, l'un desdits résonateurs SAW est sous un effort de traction et l'autre résonateur SAW est sous un effort de compression.

25. Dispositif de surveillance selon la revendication 22 ou la revendication 24, dans lequel les résonateurs SAW sont agencés sur l'arbre (120) afin qu'ils soient perpendiculaires les uns aux autres et qu'ils soient chacun à 45° par rapport à l'axe de rotation de l'arbre.

26. Dispositif de surveillance selon l'une quelconque des revendications 23 à 25, dans lequel un signal de commande RF est transmis aux résonateurs SAW via l'ensemble de couplage.

27. Dispositif de surveillance selon la revendication 26, dans lequel le signal de commande RF est généré par un générateur de signaux RF intégré dans le moyen d'interface (104).

28. Dispositif de surveillance selon l'une quelconque des revendications précédentes, dans lequel le dispositif de surveillance est adapté afin d'être placé sur un arbre (120) d'un moteur ou un arbre entraîné par un moteur.

29. Dispositif de surveillance selon la revendication 28, dans lequel le moyen d'interface (104) transmet des signaux à une unité de commande de moteur.

30. Dispositif de surveillance selon la revendication 28 ou la revendication 29, dans lequel le moteur est n'importe lequel d'un moteur à combustion interne, d'un moteur électrique ou d'une turbine à gaz.
